(19) Europäisches Patentamt
European Patent Office
Office européen des brevets

(11) **EP 2 198 290 B1**

(12) **EUROPÄISCHE PATENTSCHRIFT**

(45) Veröffentlichungstag und Bekanntmachung des Hinweises auf die Patenterteilung:
**02.12.2015 Patentblatt 2015/49**

(51) Int Cl.:
***G01N 33/20*** *(2006.01)*    ***C21C 5/30*** *(2006.01)*
***C21C 5/38*** *(2006.01)*    ***C21C 5/46*** *(2006.01)*

(21) Anmeldenummer: **08801159.8**

(22) Anmeldetag: **08.08.2008**

(86) Internationale Anmeldenummer:
**PCT/DE2008/001336**

(87) Internationale Veröffentlichungsnummer:
**WO 2009/030192 (12.03.2009 Gazette 2009/11)**

(54) **INDIREKTE BESTIMMUNG DER ABGASRATE BEI METALLURGISCHEN PROZESSEN**

INDIRECT DETERMINATION OF THE WASTE GAS RATE FOR METALLURGICAL PROCESSES

DÉTERMINATION INDIRECTE DU DÉBIT DE GAZ D'ÉCHAPPEMENT DANS DES PROCESSUS MÉTALLURGIQUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.09.2007 DE 102007044568**

(43) Veröffentlichungstag der Anmeldung:
**23.06.2010 Patentblatt 2010/25**

(73) Patentinhaber: **SMS group GmbH**
**40237 Düsseldorf (DE)**

(72) Erfinder: **REICHEL, Johann**
**40489 Düsseldorf (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
DE-A1- 2 839 316    US-A- 3 400 585
US-A- 4 251 269    US-A- 4 273 312

EP 2 198 290 B1

**Beschreibung**

Die Erfindung betrifft die indirekte Bestimmung des Abgasrate (Abgasdurchflusses) bei metallurgischen Prozessen.

Informationen über das Abgas, beispielsweise dessen zeitabhängige Zusammensetzung und/oder Menge, stellen wichtige Hilfsmittel dar, um metallurgische Prozesse steuern zu können.

Aus der PCT/EP2005/006848 ist ein Verfahren zur berührungslosen Abgasmessung bekannt, insbesondere an einem Konverter, wobei mittels eines FTIR-Spektrometers ein Abgasvolumensegment messtechnisch erfasst wird.

Bei einem weiteren Verfahren, wie es aus der DE 28 39 316 bekannt ist, erfolgt eine massenspektrometrische Überwachung einer Probe auf die Ionisationsströme für ausgewählte Peaks betreffend das CO, $CO_2$, $N_2$ und ein Referenzgas in der Probe. Das Referenzgas kann beispielsweise Helium sein.

Aufgabe der Erfindung ist es, ein Verfahren zu schaffen, mit dem eine genauere Angabe über die Abgasrate bei metallurgischen Prozessen gemacht werden kann.

Gemäß der Erfindung wird dem Abgas zunächst ein Referenzgas, wie Helium, zugesetzt und zwar zu einem Zeitpunkt, der strömungsmäßig soweit vor der Probennahme liegt, dass eine gründliche Durchmischung des Referenzgases und des Abgases erfolgt, also quasi eine homogene Verteilung erreicht wird.

Die indirekte Bestimmung der Abgasrate auf Heliumbasis besteht dann in der Helium- und Stickstoffanalyse des Abgases, gemessen mit einem Massenspektrometer, unter Berücksichtigung der zugesetzten Heliummenge.

Die Kombination von beidem ergibt die Möglichkeit zur Berechnung der Abgasrate mit den nachfolgenden Formeln:

$$Q_W = \frac{1}{He} Q_{HeB} + \frac{He_{Air}}{He} Q_L \qquad (1)$$

wobei:

$Q_W$: errechnete Abgasrate Nm3/min
$Q_{HeB}$: gemessene Heliumdurchflußmenge Nm3/min
$Q_L$: errechnete Falschluft Nm3/min
He: gemessene Heliumkonzentration im Abgas (-)
$He_{Air}$: gemessene Konzentration in der Luft (-), entspricht 5,2 ppm

Die Falschluft kann nach folgender Formel bestimmt werden:

$$Q_L = \frac{\dfrac{N_2}{He}}{N_{2Air} - \dfrac{N_2}{He} He_{Air}} Q_{HeB} - \frac{1}{N_{2Air} - \dfrac{N_2}{He} He_{Air}} Q_{N2S} \qquad (2)$$

$$\text{mit } Q_{N2S} = Q_{N2B} + Q_{N2Steel} \qquad (3)$$

und

$N_2, He$: gemessene Abgas Stickstoff, Helium Konzentration
$N_{2Air}$, $He_{Air.}$: Stickstoff, Helium Konzentration in der Luft, entsprechend in absoluten Werten 0,78 und 5,2 E-4
$Q_{N2S}$: Quelle Stickstoffmenge Nm3/min
$Q_{N2B}$: gemessene Stickstoffrate (Prozessgas) Nm3/min
$Q_{N25teel}$: errechnete Stickstoffrate als Entgasungsprodukt Nm3/min

Nach Einsetzen der Formeln (2) und (3) in die Formel (1) kann die Abgasrate in die Form gebracht werden:

$$Q_W = \frac{1}{He - \dfrac{N_2}{N_{2\,Air}} He_{Air}} Q_{HeB} - \frac{1}{He \dfrac{N_{2\,Air}}{He_{Air}} - N_2} (Q_{N2B} + Q_{N2\,Steel}) \qquad (4)$$

Der negative Teil der Formel beschreibt den Einfluss des in den flüssigen Stahl geblasenen Stickstoffs ($Q_{N2B}$) im Fall einer speziellen Stahlbehandlung und die Stickstoffrate bei der Entgasung ($Q_{N2Steel}$) vom flüssigen Stahl auf der global errechneten Abgasrate.

Im Normalfall wird Argon als Rührgas oder Inertgas benutzt, so dass nur die bei der Entgasung anfallende Menge an Stickstoff theoretische Bedeutung für die Genauigkeit der Abgasdurchflußmengenberechnung hat. Da im Vergleich zur globalen Abgasrate dies sehr gering ist, kann sie vernachlässigt werden.

Abgasrate bestimmt durch eine Messeinheit (Massenspektrometer) in Nm3/min:

Vereinfachte Formel

$$Q_W = \frac{1}{He - He_{Air} \dfrac{N_2}{N_{2Air}}} Q_{HeB} \qquad (5)$$

Abschätzung der notwendigen minimalen Helium-Konzentration im Abgas, bei der eine Kohlenstoffbilanz mit der Genauigkeit von +/-(0,005÷0,007%) erreicht beträgt:

$$\text{Ca. } 100 \times He_{Air}$$

Das **Bild 1** zeigt das oben beschriebene Messsystem angewandt bei der Steuerung eines metallurgischen Prozesses, und zwar am Beispiel eines VOD- Prozesses, wobei hier nur die für das Verständnis der Erfindung notwendigen Teile dargestellt sind.

In den Abgasstrom wird Helium injiziert, wobei die Menge entsprechend dem Abgasdruck eingestellt wird. In der Figur sind dazu die Heliumquelle, der Abgasdruckmesser und der Helium Durchflussregler angeordnet und dargestellt.

Der entsprechende Wert für die zugesetzte Heliummenge wird von der Messeinheit erfasst und für die Berechnung verwendet.

Aus dem Abgasstrom wird dann eine Probe entnommen und der Messstation zugeführt.

Entsprechend der vorher beschriebenen Formel wird dann aus der Durchflussmenge $Q_{HeB}$, der Gaskonzentration X%, der N2 Prozessgasmenge $Q_{N2B}$ und bei der Berücksichtigung der N2-Reaktionsgasmenge $Q_{N2Steel}$, falls die Messgenauigkeit es erfordert, die Abgasdurchflussmenge $Q_W$ bestimmt.

**Patentansprüche**

**1.** Verfahren zur indirekten Bestimmung der Abgasrate bei metallurgischen, die Behandlung von flüssigem Stahl betreffenden, Prozessen, wobei dem Abgas zunächst Helium als Referenzgas zugesetzt wird, und zwar zu einem Zeitpunkt, der strömungsmäßig soweit vor der Probennahme liegt, dass eine gründliche Durchmischung des Referenzgases und des Abgases erfolgt, also quasi eine homogene Verteilung erreicht wird, und dass dann eine quantitative Helium- und Stickstoffanalyse des Abgases, gemessen mit einem Massenspektrometer, unter Berücksichtigung der zugesetzten Heliummenge, erfolgt und **dadurch gekennzeichnet**, das die Abgasrate bestimmt wird nach der Formel:

$$Q_W = \frac{1}{He - He_{Air} \dfrac{N_2}{N_{2Air}}} Q_{HeB}$$

**2.** Verfahren nach Anspruch 1,
**dadurch gekennzeichnet,**
**dass** an der Heliumquelle eine Durchflußmengenregelung erfolgt.

**3.** Verfahren nach den vorstehenden Ansprüchen,
**dadurch gekennzeichnet,**
**dass** massenspektrometerisch eine Bestimmung von $O_2$, CO, $CO_2$, $N_2$, Ar, He, $H_2$ erfolgt.

**Claims**

**1.** Method for indirect determination of the waste gas rate in metallurgical processes relating to the treatment of liquid steel, wherein initially helium is added as reference gas to the waste gas and in particular at an instant which in terms of flow lies so far in advance of sampling that a thorough intermixing of the reference gas and waste gas takes place, thus quasi a homogenous distribution is achieved, and that then a quantitative helium and nitrogen analysis of the waste gas, measured by a mass spectrometer, is carried out with consideration of the added amount of helium and **characterised in that** the waste gas rate is determined in accordance with the formula:

$$Q_w = \frac{1}{He - He_{Air} \dfrac{N_2}{N_{2Air}}} Q_{HeB}$$

**2.** Method according to claim 1, **characterised in that** regulation of throughflow amount is carried out at the helium source.

**3.** Method according to the preceding claims, **characterised in that** determination of $O_2$, CO, $CO_2$, $N_2$, Ar, He, $H_2$ is carried out by mass spectrometry.

**Revendications**

**1.** Procédé pour la détermination indirecte du taux de gaz d'échappement dans des processus métallurgiques qui concernent le traitement d'acier en fusion, dans lequel d'abord on ajoute aux gaz d'échappement de l'hélium à titre de gaz de référence, et plus précisément, à un moment qui précède, en se basant sur l'écoulement, le prélèvement d'échantillon, et qui correspond au moment auquel on obtient un mélange en profondeur du gaz de référence et des gaz d'échappement, c'est-à-dire au moment auquel on atteint pratiquement une distribution homogène, et dans lequel ensuite on procède à une analyse quantitative de la teneur des gaz d'échappement en hélium et en azote, que l'on mesure avec un spectromètre de masse, en prenant en compte la quantité ajoutée d'hélium, et **caractérisé en ce que** l'on détermine le taux des gaz d'échappement conformément à la formule :

$$Q_w = \frac{1}{He - He_{Air} \dfrac{N_2}{N_{2Air}}} Q_{HeB}$$

**2.** Procédé selon la revendication 1, **caractérisé en ce qu'**on procède, à la source de l'hélium, à un réglage du débit.

**3.** Procédé selon l'une quelconque des revendications précédentes, **caractérisé en ce que** l'on procède, en faisant appel à la spectrométrie de masse, à une détermination de la teneur en $O_2$, CO, $CO_2$, $N_2$, Ar, He, $H_2$.

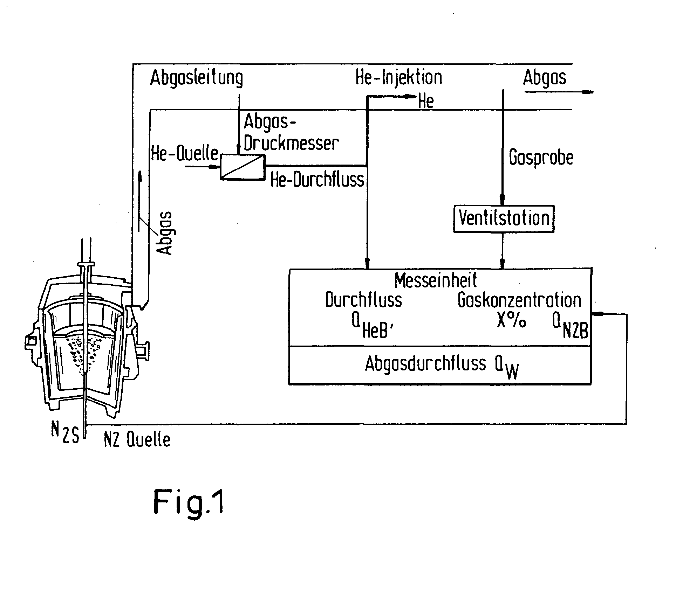

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2005006848 W
- DE 2839316